# EUROPÄISCHE PATENTSCHRIFT

(11) **EP 3 987 128 B1**
(45) Veröffentlichungstag und Bekanntmachung des Hinweises auf die Patenterteilung: **17.07.2024**
(21) Anmeldenummer: 20732581.2
(22) Anmeldetag: 12.06.2020
(51) Int. Cl.: E04H 12/16, B23K 7/10, E04H 12/34

(54) **VERFAHREN ZUM TRENNEN GESPANNTER SPANNGLIEDER EINES BETONTURMS**
METHOD FOR CUTTING TENSIONED TENSIONING MEMBERS OF A CONCRETE TOWER
PROCÉDÉ DE SÉPARATION D'ÉLÉMENTS PRÉCONTRAINTS ASSEMBLÉS D'UNE TOUR EN BÉTON

(30) Priorität: 21.06.2019 DE 102019116840
(43) Veröffentlichungstag der Anmeldung: 27.04.2022
(73) Patentinhaber: Wobben Properties GmbH, 26607 Aurich (DE)
(72) Erfinder: HARMS, Johann, 26632 Ihlow (DE); IHNEN, Thomas, 26427 Holtgast (DE); SAATHOFF, Holger, 26427 Esens (DE)
(74) Vertreter: Eisenführ Speiser
(86) Internationale Anmeldenummer: PCT/EP2020/066262
(87) Internationale Veröffentlichungsnummer: WO 2020/254199

(56) Entgegenhaltungen:
- DE-A1- 3 126 685
- DE-B3- 102016 113 224
- DE-U1- 202008 016 127

## Beschreibung

Die Erfindung betrifft ein Verfahren zum Trennen gespannter Spannglieder eines Betonturms, insbesondere eines Windenergieanlagen-Betonturms.

Windenergieanlagen sind bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit einem, zwei, vier oder mehr Rotorblättern möglich sind. Eine Windenergieanlage umfasst einen Rotor, der sich durch einen Luftstrom rotatorisch bewegt und somit durch einen Läufer einen Generator antreibt, wobei der Generator im Allgemeinen innerhalb einer Gondel angeordnet ist. Die Gondel ist vorzugsweise auf einem Turm angeordnet, der entweder als Stahlturm oder als Betonturm ausgebildet ist. Ein Betonturm ist insbesondere ein Turm, der zum überwiegenden Teil aus Beton gefertigt ist, wobei jedoch auch Abschnitte aus einem anderen Material, vorzugsweise Stahl, hergestellt sein können. Ein derartiger Turm weist vorzugsweise eine rohrförmige Geometrie auf, wobei der Durchmesser des Turms entlang seiner Längserstreckung zur Gondel hin abnimmt.

Betontürme für Windenergieanlagen werden in der Regel aus Spannbeton hergestellt. Betontürme aus Spannbeton zeichnen sich durch eine zusätzliche Längskraft aus, die in der Regel durch gespannte Stahleinlagen aufgebracht wird. Der Beton des Betonturms wird durch die Längskraft mit einer Druckkraft beaufschlagt. Die Stahleinlagen können beispielsweise als Spannglieder ausgebildet sein. Die Spannglieder können sich von einem Turmfuß zu einem Turmkopf eines Betonturms erstrecken. Darüber hinaus können sich die Spannglieder auch abschnittsweise innerhalb des Betonturms erstrecken.

Ein Rückbau von Betontürmen kann unter Umständen erforderlich sein. Der Rückbau ist beispielsweise im Rahmen des Repowerings und bei einsturzgefährdeten Betontürmen notwendig. Der Rückbau von Betontürmen ist jedoch mit einer Vielzahl an Schwierigkeiten verbunden, insbesondere die Sicherheit beteiligter Personen und der hohe Aufwand sind nachteilig. Die existierenden Verfahren zum Rückbau von Betontürmen und Systeme zur Durchführung derartiger Verfahren bieten verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 10 2016 113 224 B3, die den nächstliegenden Stand der Technik repräsentiert, DE 2 246 093 A, EP 2 339 094 A1, US 5 469 677 A, DE 10 2016 113 227 B3.

Es ist daher eine Aufgabe der vorliegenden Erfindung, ein Verfahren zum Trennen gespannter Spannglieder eines Betonturms, insbesondere eines Windenergieanlagen-Betonturms, bereitzustellen, welches einen oder mehrere der genannten Nachteile vermindert oder beseitigt. Insbesondere ist es eine Aufgabe der Erfindung, eine Lösung bereitzustellen, die den sicheren und/oder kostengünstigen Rückbau eines Betonturms ermöglicht. Ferner ist es eine Aufgabe der vorliegenden Erfindung, eine Lösung bereitzustellen, die einen sicheren Rückbau eines einsturzgefährdeten Betonturms ermöglicht.

Diese Aufgabe wird gelöst durch ein Verfahren zum Trennen gespannter Spannglieder eines Betonturms, insbesondere eines Windenergieanlagen-Betonturms, der eine Vielzahl an Spanngliedern aufweist, umfassend Koppeln eines stabförmigen Positionierelements mit einem Grundgestell, Positionieren des Positionierelements derart, dass dessen dem Betonturm zugewandtes Trennende innerhalb eines Trennbereichs im Inneren des Betonturms angeordnet ist, wobei sich innerhalb des Trennbereichs mindestens eines der Spannglieder befindet, Anordnen einer Trenneinheit an dem Trennende des Positionierelements, Positionieren des Trennendes derart, dass die Trenneinheit eine vorbestimmte Beabstandung zu einem der Spannglieder aufweist, Trennen des Spannglieds mit der Trenneinheit.

vorbestimmte Beabstandung zu einem der Spannglieder aufweist, Trennen des Spannglieds mit der Trenneinheit.

Die zu trennenden Spannglieder liegen vorzugsweise als externe Spannglieder in dem Betonturm vor. Externe Spannglieder sind insbesondere derartige Spannglieder, die vom Innenraum des Betonturms zugänglich sind. Diese externen Spannglieder unterscheiden sich von internen Spanngliedern dadurch, dass die internen Spannglieder innerhalb der Wandung des Betonturms oder innerhalb von Hüllrohren angeordnet sind. Ferner vorzugsweise können die zu trennenden Spannglieder auch interne Spannglieder umfassen oder als solche vorliegen.

Spannglieder werden auch als Spannlitzen bezeichnet. In der Regel sind mehrere Spannglieder zu einer Spanneinheit zusammengefasst. Die zu einer Spanneinheit zusammengefassten Spannglieder sind meist mit einem oberen Spannanker an ihrem oberen Ende und mit einem unteren Spannanker an ihrem unteren Ende mit dem Betonturm gekoppelt.

Der Trennbereich befindet sich zumindest teilweise im Inneren des Betonturms. Abschnitte des Trennbereichs können auch außerhalb des Betonturms angeordnet sein. Vorzugsweise ist der Trennbereich vollständig im Inneren des Betonturms angeordnet. Der Trennbereich ist vorzugsweise derart dimensioniert, dass die Trenneinheit mittels des stabförmigen Positionierelements vollständig innerhalb des Trennbereichs zum Trennen eingesetzt werden kann. Das Grundgestell dient vorzugsweise als Halterung für das stabförmige Positionierelement. Zu diesem Zweck ist das stabförmige Positionierelement mit dem Grundgestell gekoppelt.

Die Kopplung des stabförmigen Positionierelements mit dem Grundgestell ist vorzugsweise derart ausgebildet, dass das stabförmige Positionierelement innerhalb des Trennbereichs bewegt werden kann, ferner vorzugsweise die Trenneinheit innerhalb des Trennbereichs bewegt werden kann. Dies bedeutet insbesondere, dass das stabförmige Positionierelement in seiner Längsrichtung bewegbar mit dem Grundgestell gekoppelt ist. Darüber hinaus ist es bevorzugt, dass das stabförmige Positionierelement rotatorisch bewegbar mit dem Grundgestell gekoppelt ist. Die Ausgestaltung der Kopplung des stabförmigen Positionierelements mit dem Grundgestell kann unterschiedlich ausgebildet werden, wie im Nachfolgenden noch näher erläutert wird.

Das Grundgestell kann ein, zwei oder mehrere Grundgestellabschnitte aufweisen. Die zwei oder mehreren Grundgestellabschnitte können separat voneinander oder miteinander verbunden sein. Beispielsweise kann ein erster Grundgestellabschnitt innerhalb des Turms angeordnet werden und ein zweiter Grundgestellabschnitt kann außerhalb des Turms angeordnet sein. Der erste Grundgestellabschnitt und der zweite Grundgestellabschnitt können separat voneinander angeordnet sein. Vorzugsweise sind der erste Grundgestellabschnitt und der zweite Grundgestellabschnitt miteinander gekoppelt, vorzugsweise miteinander verbunden.

Das Positionierelement weist das Trennende auf, das in dem Trennbereich angeordnet wird. Das Positionierelement erstreckt sich vorzugsweise von dem Trennende hin zu einem Bedienende. Das Bedienende des Positionierelements ist vorzugsweise dem Trennbereich abgewandt, um von einem Bediener bedient zu werden. Die Erstreckung des Positionierelements zwischen dem Trennende und dem Bedienende ist vorzugsweise derart gewählt, dass das Bedienende aus dem Betonturm herausragt, sodass vorzugsweise eine Bedienung außerhalb des Betonturms möglich ist. Das Positionierelement ist stabförmig ausgebildet. Stabförmig bedeutet insbesondere, dass es sich um ein langgestrecktes Element handelt, dessen Haupterstreckungsrichtung um ein Vielfaches größer ist als die Querschnittsabmessungen orthogonal zu der Haupterstreckungsrichtung. Das Positionierelement kann ein, zwei oder mehrere stabförmige Elemente aufweisen, die ferner vorzugsweise parallel und/oder sequentiell angeordnet sind.

An dem Trennende bzw. in einem Abschnitt angrenzend an das Trennende ist die Trenneinheit an dem Positionierelement angeordnet. Die Trenneinheit ist vorzugsweise ausgebildet, Spannglieder eines Betonturms zu trennen. Wie im Folgenden noch näher erläutert wird, kann die Trenneinheit beispielsweise als Schneidbrenner oder als spanabhebendes Werkzeug ausgebildet sein oder diesen, dieses oder diese umfassen. Die Trenneinheit wird derart innerhalb des Trennbereichs angeordnet, dass ein Trennen der Spannglieder, bzw. eines Spannglieds mit der Trenneinheit möglich ist. Hierzu wird die Trenneinheit derart positioniert, dass diese eine vorbestimmte Beabstandung zu einem der Spannglieder aufweist. Die vorbestimmte Beabstandung wird vorzugsweise in Abhängigkeit der eingesetzten Trenneinheit ausgewählt. Eine als Schneidbrenner ausgebildete Trenneinheit wird beispielsweise weniger als 5 cm, weniger als 3 cm oder weniger als 2 cm von der zu trennenden Spannlitze positioniert. Ferner vorzugsweise wird die als Schneidbrenner ausgebildete Trenneinheit derart positioniert, dass eine Brennerflamme in einem Winkel von 45 Grad auf die Spannlitze trifft.

Das Trennen des Spannglieds erfolgt mit der Trenneinheit. Vorzugsweise erfolgt das Trennen des Spannglieds mit der Trenneinheit nachdem die Trenneinheit positioniert wurde. Das Trennen des Spannglieds kann auch das Trennen von zwei oder mehreren Spanngliedern, vorzugsweise gleichzeitig, umfassen. Beispielsweise bei als Spanneinheit zusammengefassten Spanngliedern, wobei die Spannglieder eine geringe oder im Wesentlichen keine Beabstandung zueinander aufweisen, kann das Trennen eines einzelnen Spannglieds zumindest auch das teilweise Trennen von einem, zwei oder mehreren weiteren Spanngliedern bewirken. Vorzugsweise wird die Trenneinheit derart angeordnet, dass zwei oder mehrere Spannglieder gleichzeitig getrennt werden.

Die im Vorherigen genannten Schritte des Verfahrens zum Trennen gespannter Spannglieder eines Betonturms können im Wesentlichen in beliebiger Reihenfolge durchgeführt werden. Vorzugsweise ist das Koppeln des stabförmigen Positionierelements mit dem Grundgestell und das Anordnen der Trenneinheit an dem Positionierelement als vorbereitende Maßnahme durchgeführt. Das Grundgestell kann mit dem Positionierelement und der Trenneinheit als eine vormontierte Vorrichtung zu dem Betonturm gebracht werden, um dort das Verfahren zum Trennen gespannter Spannglieder des Betonturms durchzuführen. Vorzugsweise erfolgt das Trennen des Spannglieds mit der Trenneinheit nachdem die Trenneinheit derart positioniert wurde, dass diese eine vorbestimmte Beabstandung zu einem der Spannglieder aufweist. Ferner vorzugsweise wurde das Grundgestell positioniert, bevor die Trenneinheit positioniert wurde und das Spannglied mit der Trenneinheit getrennt wird.

Der Erfindung lag unter anderem die Erkenntnis zugrunde, dass das Trennen gespannter Spannglieder eines Betonturms mit Gefahren verbunden ist. Die Spannglieder sind in der Regel mit einer mehrere Kilonewton aufweisenden Kraft gespannt. Beim Durchtrennen der Spannglieder entspannt sich das getrennte Spannglied schlagartig und in der Regel derart, dass dieses nicht vorhersehbare Bewegungen im Innenraum des Turms ausführt und somit ein Sicherheitsrisiko für im Turm befindliche Personen darstellt.

Der Erfindung lag ferner die Erkenntnis zugrunde, dass das Trennen gespannter Spannglieder eines Betonturms auch erfolgen kann, ohne dass sich eine Person im Innenraum des Betonturms befindet. Hierzu schlägt die Erfindung vor, das Grundgestell innerhalb des Betonturms und innerhalb eines Trennbereichs vorzusehen, sodass mittels des stabförmigen Positionierelements eine Trenneinheit an einem zu trennenden Spannglied angeordnet werden kann.

Darüber hinaus lag der Erfindung die Erkenntnis zugrunde, dass einsturzgefährdete Betontürme mit gespannten Spanngliedern nur unter erheblichen Sicherheitsrisiken abgebaut werden können. Das im Vorhergehenden vorgeschlagene Verfahren ermöglicht den Abbau von einsturzgefährdeten Betontürmen mit gespannten Spanngliedern, ohne dass eine Person den Betonturm betreten muss. Ferner ermöglicht das vorgeschlagene Verfahren eine kostengünstige Möglichkeit, einen Betonturm rückzubauen.

Darüber hinaus bietet das im Vorhergehenden beschriebene Verfahren die Möglichkeit, dass dieses an verschiedene Verfahrenssituationen angepasst wird. Betontürme, insbesondere solche von Windenergieanlagen, weisen unterschiedliche Ausbildungen auf, beispielsweise unterscheiden sich die Einbausituationen der Spannglieder. Durch das vorgeschlagene Verfahren kann jedoch individuell auf verschiedene Einbausituationen von Spanngliedern innerhalb des Betonturms und darüber hinaus auch auf unterschiedliche Zugänglichkeitssituationen, beispielsweise durch unterschiedlich ausgebildete Zugänge in den Betonturm, eingegangen werden.

In einer bevorzugten Ausführungsvariante des Verfahrens ist vorgesehen, dass das Grundgestell außerhalb des Betonturms angeordnet wird, oder das Grundgestell vollständig oder teilweise innerhalb des Betonturms angeordnet wird. Wenn das Grundgestell außerhalb des Betonturmes angeordnet wird, ist ein Betreten des Turmes, beispielsweise durch einen Bediener, beim Durchführen des Verfahrens zum Trennen gespannter Spannglieder nicht erforderlich. Dadurch wird das Trennen gespannter Spannglieder insbesondere dann ermöglicht, wenn ein Zutritt in den Turm nicht möglich und/oder nicht zulässig ist. In diesem Fall ist es insbesondere bevorzugt, dass die Trenneinheit als ein im Folgenden noch näher beschriebener Schneidbrenner ausgebildet ist oder diesen umfasst. Wenn das Grundgestell teilweise oder vollständig innerhalb des Turmes angeordnet wird, ist eine bessere Positionierbarkeit der Trenneinheit relativ zu einem Spannglied möglich. Bei einer Anordnung des Grundgestells innerhalb des Turmes ist es bevorzugt, dass die Trenneinheit als ein im Folgenden noch näher erläutertes spanabhebendes Werkzeug ausgebildet ist oder dieses umfasst.

In einer bevorzugten Ausführungsvariante des Verfahrens ist vorgesehen, dass sich das Positionierelement von dem Trennbereich zu einem Bedienbereich, der sich vorzugsweise außerhalb des Turms befindet, erstreckt.

Der Bedienbereich ist vorzugsweise der Bereich oder Abschnitt, an dem ein Bediener das stabförmige Positionierelement bedienen kann. Vorzugsweise ist dieser Bereich oder Abschnitt außerhalb des Turms angeordnet, sodass der Bediener des stabförmigen Positionierelements außerhalb des Turms agieren kann.

Gemäß einer weiteren bevorzugten Ausführungsvariante des Verfahrens ist vorgesehen, dass dieses den Schritt Anordnen eines Arbeitsschlittens an dem Grundgestell umfasst, wobei der Arbeitsschlitten an dem Grundgestell bewegbar angeordnet ist, das Positionierelement mittels des Arbeitsschlittens mit dem Grundgestell gekoppelt ist, und wobei vorzugsweise das Positionierelement in einer Verfahrrichtung des Arbeitsschlittens fest an dem Arbeitsschlitten angeordnet ist.

Der Arbeitsschlitten wirkt vorzugsweise als Kopplungselement zwischen dem Grundgestell und dem Positionierelement. Die Kopplung des Arbeitsschlittens mit dem Grundgestell ist vorzugsweise derart ausgebildet, dass das Grundgestell eine Schiene aufweist, auf der der Arbeitsschlitten geführt ist. Insbesondere ist diese Führung derart ausgebildet, dass ein Herunterfallen des Arbeitsschlittens von dem Grundgestell vermieden oder erschwert wird. Das Positionierelement ist vorzugsweise in einer Verfahrrichtung des Arbeitsschlittens fest an dem Arbeitsschlitten angeordnet. Die Verfahrrichtung des Arbeitsschlittens ist vorzugsweise in Längsrichtung des Grundgestells gerichtet. Durch eine derartige Anordnung kann das Positionierelement von einem dem Trennbereich abgewandten Ende bedient werden und mittels des Arbeitsschlittens auf dem Grundgestell verfahren werden. Infolgedessen kann das dem Trennbereich zugewandte Ende des Positionierelements innerhalb des Trennbereichs bewegt werden. Somit kann die an diesem Ende angeordnete Trenneinheit innerhalb des Trennbereichs bewegt werden und die vorbestimmte Beabstandung zu einem Spannglied eingestellt werden.

Ferner ist es bevorzugt, dass das Grundgestell eine Führungsschiene aufweist, und der Arbeitsschlitten zwei an einer Achse angeordnete Führungselemente, insbesondere Räder, aufweist, wobei die Beabstandung der Führungselementinnenseiten, insbesondere Radinnenseiten, größer ist als eine Breite der Führungsschiene.

Darüber hinaus kann es bevorzugt sein, dass der Arbeitsschlitten im Wesentlichen vertikal ausgerichtete Schenkel aufweist, zwischen denen die Führungsschiene des Grundgestells anordenbar ist. Darüber hinaus können sich diese Schenkel gewinkelt von dem restlichen Arbeitsschlitten hinweg erstrecken, sodass eine Führung an der Führungsschiene erfolgt.

Alternativ oder ergänzend zu dem Arbeitsschlitten kann das Positionierelement anderweitig mit dem Grundgestell gekoppelt sein. Das Grundgestell kann beispielsweise eine Führungshülse aufweisen, wobei innerhalb der Führungshülse das Positionierelement verschiebbar angeordnet ist. Darüber hinaus kann das Positionierelement ausfahrbar ausgebildet sein. Das ausfahrbare Positionierelement kann entweder fest oder verschiebbar mit dem Grundgestell gekoppelt sein.

Eine weitere bevorzugte Fortbildung des Verfahrens zeichnet sich dadurch aus, dass die Trenneinheit als ein Schneidbrenner ausgebildet ist oder diesen umfasst, an dem Schneidbrenner mindestens ein Gaszuführelement, vorzugsweise ein gasführender Schlauch, angeordnet ist, und vorzugsweise das Gaszuführelement an dem Positionierelement befestigt ist, vorzugsweise lösbar befestigt ist.

Unter einem Schneidbrenner wird insbesondere ein Werkzeug zum Brennschneiden verstanden. Das Brennschneiden ist insbesondere ein Trennverfahren, mit dem Metallwerkstoffe getrennt werden, indem eine Flamme den Werkstoff an der Oberfläche auf eine Zündtemperatur erhitzt und durch die Zufuhr von Sauerstoff verbrennt. Die freiwerdende Verbrennungswärme erhitzt die darunterliegenden Werkstoffschichten wiederum auf Zündtemperatur, sodass sich der Prozess selbsttätig in die Tiefe fortsetzt. Die entstehende flüssige Schlacke wird durch den Schneidsauerstoff ausgeblasen.

An dem Schneidbrenner ist mindestens ein Gaszuführelement angeordnet. Das Gaszuführelement ist an seinen dem Schneidbrenner abgewandten Ende vorzugsweise mit einem Gasspeicher gekoppelt. Das für den Schneidprozess erforderliche Gas wird von dem Gasspeicher vorzugsweise durch das Gaszuführelement zu dem Schneidbrenner befördert. Dies erfolgt vorzugsweise dadurch, dass das Gas in dem Gasspeicher unter Druck gespeichert ist. Zwischen dem Schneidbrenner und dem Gasspeicher befindet sich vorzugsweise ein einstellbares Ventil zur Regulierung des Gasstromes in den Schneidbrenner. Das Ventil kann auch Teil des Schneidbrenners sein, wobei vorzugsweise das Ventil vor einer Austrittsdüse des Schneidbrenners angeordnet ist.

Es ist bevorzugt, dass dem Schneidbrenner ein erstes Gas mittels eines ersten Gaszuführelements und ein zweites Gas mittels eines zweiten Gaszuführelements zugeführt wird. Das erste Gas ist vorzugsweise eine Brenngas-Sauerstoff-Gemisch. Das zweite Gas ist vorzugsweise Sauerstoff.

Eine bevorzugte Fortbildung des Verfahrens sieht vor, dass die Trenneinheit als ein spanabhebendes Werkzeug ausgebildet ist oder dieses umfasst, und vorzugsweise die Trenneinheit mit einer Werkzeugaufnahme an dem Positionierelement angeordnet ist. Das spanabhebende Werkzeug kann beispielsweise ein Winkelschneider oder ein Winkelschleifer sein. Der Winkelschleifer kann mit einer Schruppscheibe ausgestattet sein. Darüber hinaus kann das spanabhebende Werkzeug ein Schneidwerkzeug, beispielsweise eine Zange, eine Schere oder eine Schneidpresse sein. Die Zange kann beispielsweise als Hydraulikzange und die Schere kann als Hydraulikschere ausgebildet sein. Das spanabhebende Werkzeug kann beispielsweise an dem zu trennenden Spannglied fixiert werden.

In einer bevorzugten Ausführungsvariante des Verfahrens ist vorgesehen, dass die Spannglieder in einem dem Turmfuß abgewandten Bereich des Betonturms mit ihren Gliedenden mittels einer Ankerplatte fixiert sind, wobei die Ankerplatte vertikal ausgerichtete Durchgangsöffnungen aufweist und wobei die Gliedenden mittels Keilelementen derart in den Durchgangsöffnungen angeordnet sind, dass diese in Richtung des Turmfußes fixiert sind, das Verfahren umfassend Anordnen einer Abdeckeinheit über den Durchgangsöffnungen, und Befestigen der Abdeckeinheit an der Ankerplatte.

Der Erfindung lag ferner die Erkenntnis zugrunde, dass beim Trennen von Spanngliedern eines Betonturms die Spannglieder unkontrollierte Bewegungen auch im Turmkopf ausführen. Durch die Entspannung des Spanngliedes infolge des Trennens schieben sich die dem Turmkopf zugewandten Enden der Spannglieder aus der Verankerung heraus. Die Verankerung erfolgt regelmäßig mit einer Ankerplatte. Die Ankerplatte weist eine Anzahl von Durchgangsöffnungen, insbesondere Spanngliedöffnungen, für Spannglieder auf, die der Anzahl von Spanngliedern einer Spanneinheit entsprechen. Die dem Turmkopf zugewandten Enden der Spannglieder werden mittels Keilelementen in den Durchgangsöffnungen fixiert. Die Keilelemente fixieren die Spannglieder jedoch im Wesentlichen in einer Richtung, die dem Turmfuß zugewandt ist. In entgegengesetzter Richtung fixieren die Keilelemente die Spannglieder vorzugsweise im Wesentlichen nicht. Wenn die Spannglieder jedoch durch das Trennen eine Kraft in Richtung des Turmkopfes aufweisen, springen diese aus der Ankerplatte heraus. Zu diesem Zweck sieht diese Ausführungsvariante das Anordnen der Abdeckeinheit über den Durchgangsöffnungen vor. Durch die an der Ankerplatte befestigte Abdeckeinheit über den Durchgangsöffnungen wird eine vertikale Bewegung in Richtung des Turmkopfes der Spannglieder verhindert.

Eine weitere bevorzugte Fortbildung des Verfahrens zeichnet sich dadurch aus, dass die Abdeckeinheit ein erstes Abdeckelement mit einer ersten Abdeckplatte aufweist, wobei auf der ersten Abdeckplatte ein Brückenelement derart angeordnet ist, dass eine lichte Höhe zwischen der ersten Abdeckplatte und dem Brückenelement besteht, und die erste Abdeckplatte eine erste Plattenfreifläche und eine zweite Plattenfreifläche aufweist, wobei das Brückenelement zwischen der ersten Plattenfreifläche und der zweiten Plattenfreifläche angeordnet ist, auf der ersten Plattenfreifläche eine zweite Abdeckplatte und auf der zweiten Plattenfreifläche eine dritte Abdeckplatte angeordnet ist, die zweite Abdeckplatte und die dritte Abdeckplatte mit der ersten Abdeckplatte verbunden sind, vorzugsweise die zweite Abdeckplatte und die dritte Abdeckplatte mittels einer vierten Abdeckplatte, die sich von der zweiten Abdeckplatte bis zur dritten Abdeckplatte durch die lichte Höhe hindurch erstreckt, verbunden sind.

Eine derartig ausgebildete Abdeckeinheit ermöglicht die effiziente und vor allem auch sichere Abdeckung der Durchgangsöffnungen. Die derartig ausgebildete Abdeckeinheit kann effizient gefertigt werden und von einem Bediener mit hoher Zeiteffizienz im Turmkopf an der Ankerplatte befestigt werden.

Darüber hinaus ist es bevorzugt, dass das Befestigen der Abdeckeinheit an der Ankerplatte ein Einbringen von mindestens einer Öffnung und ein Einbringen eines Gewindes in diese Öffnung umfasst, wobei die Abdeckeinheit an der Ankerplatte mittels mindestens einer Schraube befestigt wird.

Das Einbringen der Öffnung erfolgt vorzugsweise mit einem Bohrverfahren. Hierfür wird vorzugsweise eine Magnetbohrmaschine an der Ankerplatte angeordnet oder in einem Bereich angrenzend an die Ankerplatte und mittels einer Vertikalführung bedient. Das Einbringen des Gewindes erfolgt vorzugsweise mit einem Gewindeschneidverfahren.

Ferner ist vorzugsweise vorgesehen, dass sich der Bedienbereich in einem von mindestens drei Seiten geschlossenen Bedienraum befindet, und vorzugsweise der Bedienraum als Container ausgebildet ist, wobei ferner vorzugsweise die dem Betonturm zugewandte Seite des Containers zumindest teilweise geschlossen ist.

Der Bedienraum ist vorzugsweise von dem Innenraum des Betonturms verschieden. In dem Bedienraum kann beispielsweise ein Gasspeicher, ferner vorzugsweise zwei oder mehr Gasspeicher, angeordnet sein. Das Grundgestell erstreckt sich vorzugsweise von dem Trennbereich bis zu dem Bedienbereich, wobei ein, zwei oder mehr Gaszuführelemente sich von der Trenneinheit bis hin zu dem Bedienbereich und/oder Bedienraum erstrecken. Der Bedienraum weist vorzugsweise eine erste Seitenwand und eine flächenparallel zu dieser angeordnete zweite Seitenwand auf, wobei die zwei Seitenwände mit einem Dach verbunden sind. Ferner vorzugsweise sind die zwei Seitenwände mit einem Boden verbunden. Darüber hinaus ist es bevorzugt, dass die nicht von den Seitenwänden und/oder dem Dach und/oder dem Boden geschlossenen Seiten verschließbar ausgebildet sind. Hierfür können diese offenen Seiten beispielsweise Schließelemente, beispielsweise Türen, aufweisen.

Vorzugsweise ist der Bedienraum als Container ausgebildet. Der Container ist insbesondere als Zwei-Türen-Container ausgebildet, der auch als Double-Door-Container bezeichnet wird. Der Zwei-Türen-Container weist zwei parallele Seitenwände, ein Dach und einen Boden auf, wobei die restlichen Seiten mit Türen verschließbar sind. Ein solcher Container ist für die Durchführung des Verfahrens bevorzugt, da in diesem die für das Verfahren erforderlichen Vorrichtungen und Elemente transportierbar sind und der Container somit effizient für das Verfahren genutzt werden kann. Ferner kann mit einem derartig ausgebildeten Container die Sicherheit für am Verfahren beteiligten Person weiter gesteigert werden.

In einer bevorzugten Ausführungsvariante des Verfahrens ist vorgesehen, dass das dem Schneidbrenner zugeführte Gas in mindestens einer Gasaufbewahrungseinheit angeordnet ist, und sich mindestens eine Gasaufbewahrungseinheit innerhalb des Bedienbereichs, vorzugsweise innerhalb des Bedienraums, vorzugsweise innerhalb des Containers befindet. Die Gasaufbewahrungseinheit ist insbesondere als ein Gasspeicher zu verstehen.

Beschrieben wird ferner ein Verfahren zum Auflösen der Spannung gespannter Spannglieder eines Betonturms, insbesondere eines Windenergieanlagen-Betonturms, der eine Vielzahl an Spanngliedern aufweist, die in einem turmfußnahen Bereich des Betonturms, insbesondere in einem Keller, mit einer Verankerungseinheit in Richtung eines Turmkopfes verankert sind, umfassend: Anordnen einer Trenneinheit, insbesondere eines Schneidbrenners, in einem Trennbereich, wobei sich die Verankerungseinheit innerhalb des Trennbereichs befindet, und Lösen der Verankerung mittels der Trenneinheit. Insbesondere ist es bevorzugt, dass das Lösen der Verankerung durch ein Verbrennen und/oder ein Aufschmelzen der Verankerungseinheit erfolgt, wobei dies vorzugsweise mit dem Schneidbrenner erfolgt. Dieses Verfahren wird besonders bevorzugt für interne Spannglieder verwendet, die in Hüllrohren angeordnet sind.

Beschrieben wird ferner eine Trennvorrichtung zum Trennen gespannter Spannglieder eines Betonturms, insbesondere eines Windenergieanlagen-Betonturms, umfassend ein Grundgestell, das sich von einem Arbeitsende zu einem Bedienende erstreckt, wobei das Arbeitsende innerhalb eines Betonturms, insbesondere innerhalb eines Windenergieanlagen-Betonturms, und das Bedienende außerhalb eines Betonturms, insbesondere eines Windenergieanlagen-Betonturms, vorzugsweise innerhalb eines vom Betonturm beabstandeten Bedienbereichs, anordenbar ist, ein stabförmiges Positionierelement, das mit dem Grundgestell gekoppelt ist, und eine Trenneinheit, die an einem dem Bedienende des Grundgestells abgewandten Ende des Positionierelements angeordnet ist.

In einer bevorzugten Ausführungsvariante der Trennvorrichtung ist vorgesehen, dass diese einen Arbeitsschlitten umfasst, der an dem Grundgestell angeordnet ist und vorzugsweise zumindest in einem Abschnitt angrenzend an das Arbeitsende geführt ist, und wobei das Positionierelement in einer Verfahrrichtung des Arbeitsschlittens fest an dem Arbeitsschlitten angeordnet ist.

Eine weitere bevorzugte Fortbildung der Trennvorrichtung zeichnet sich dadurch aus, dass das Grundgestell eine Führungsschiene aufweist, und der Arbeitsschlitten zwei an einer ersten Achse angeordnete erste Führungselemente, insbesondere Räder, aufweist, wobei die Beabstandung der Führungselementinnenseiten, insbesondere Radinnenseiten, größer ist als eine Breite der Führungsschiene und der Arbeitsschlitten mit der Achse auf der Führungsschiene aufliegt. Darüber hinaus ist es bevorzugt, dass der Arbeitsschlitten zwei an einer zweiten Achse angeordnete zweite Führungselemente, insbesondere Räder, aufweist.

In einer weiteren bevorzugten Fortbildung der Trennvorrichtung ist vorgesehen, dass die Trenneinheit als ein Schneidbrenner ausgebildet ist, und vorzugsweise an dem Schneidbrenner mindestens ein Gaszuführelement, vorzugsweise ein gasführender Schlauch, angeordnet ist, und ferner vorzugsweise das Gaszuführelement an dem Positionierelement befestigt ist, vorzugsweise lösbar befestigt ist. Darüber hinaus kann die Trenneinheit als ein spanabhebendes Werkzeug ausgebildet sein. Die Trenneinheit kann mit einer Werkzeugaufnahme an dem Positionierelement angeordnet sein.

Beschrieben wird ferner die Verwendung einer Trennvorrichtung nach mindestens einer der im Vorhergehenden beschriebenen Ausführungsvarianten zum Trennen gespannter Spannglieder eines

Betonturms, insbesondere eines Windenergieanlagen-Betonturms einer Windenergieanlage.

Die im Vorherigen beschriebene Trennvorrichtung und die Verwendung einer Trennvorrichtung weisen Merkmale bzw. Verfahrensschritte auf, die sie insbesondere dafür geeignet machen, für das beschriebene Verfahren zum Trennen gespannter Spannglieder eines Betonturms und ihre Fortbildungen verwendet zu werden.

Bevorzugte Ausführungsbeispiele werden exemplarisch anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, dreidimensionale Ansicht eines Aufbaus zum Durchführen eines Verfahrens zum Trennen gespannter Spannglieder eines Betonturms;
- Fig. 3a,b:: schematische, zweidimensionale Ansichten beispielhafter Trennvorrichtungen;
- Fig. 4:: eine Detailansicht der in Fig. 3a gezeigten Trennvorrichtung;
- Fig. 5:: eine schematische, dreidimensionale Ansicht einer Ankerplatte mit einer Vielzahl von befestigten Spanngliedern;
- Fig. 6:: eine schematische, dreidimensionale Ansicht eines Abdeckelementes;
- Fig. 7:: eine schematische, dreidimensionale Ansicht einer Ankerplatte mit einer Abdeckeinheit und einem Transportelement;
- Fig. 8:: eine schematische, zweidimensionale Ansicht eines im Keller eines Betonturms angeordneten Litzenkopfes; und
- Fig. 9:: ein schematisches Verfahren zum Trennen gespannter Spannglieder eines Betonturms.

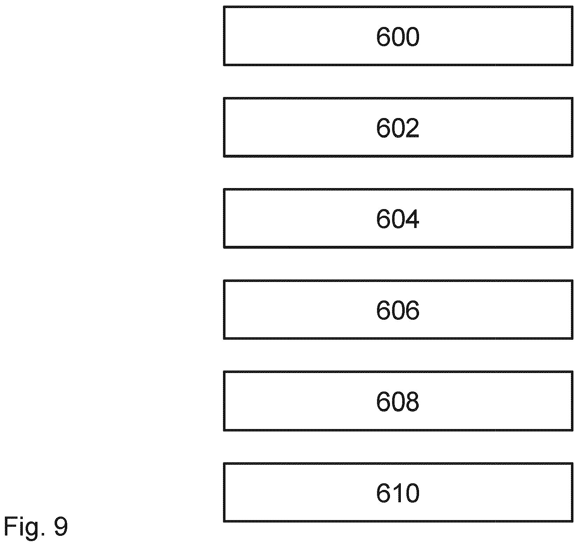

- Fig. 9:: ein schematisches Verfahren zum Trennen gespannter Spannglieder eines Betonturms.

In den Figuren sind gleiche oder im Wesentlichen funktionsgleiche bzw. -ähnliche Elemente mit den gleichen Bezugszeichen bezeichnet.

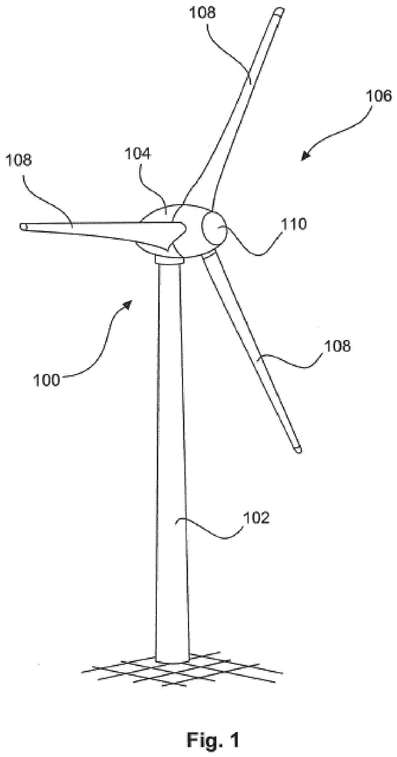

Fig. 1 zeigt eine schematische, dreidimensionale Ansicht einer beispielhaften Ausführungsform einer Windenergieanlage 100. Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Windenergieanlage 100 kann Gegenstand eines Rückbaus sein, der mit einem im Folgenden beschriebenen Verfahren und einer entsprechenden Trennvorrichtung durchgeführt bzw. unterstützt werden kann.

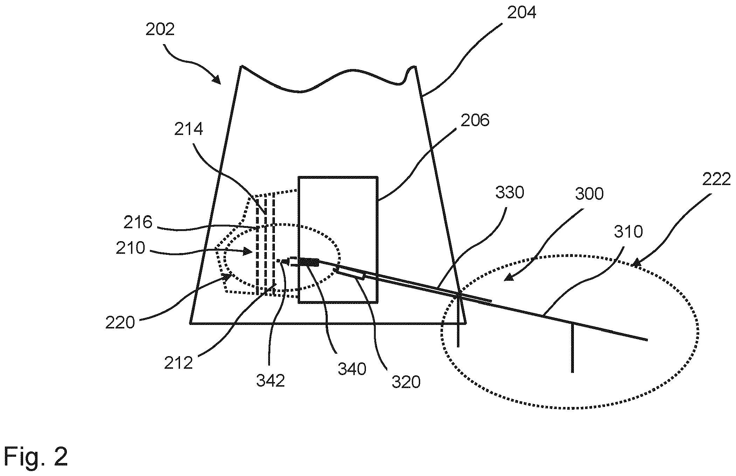

Fig. 2 zeigt eine schematische, dreidimensionale Ansicht eines Aufbaus zum Durchführen eines Verfahrens zum Trennen gespannter Spannglieder eines Betonturms. Der Betonturm 202 weist eine Turmwand 204 auf. In der Turmwand 204 ist eine Turmöffnung 206 angeordnet, die beispielsweise als Eingang in den Turm 202 ausgebildet ist und beispielsweise mit einer Tür verschlossen werden kann. Links von der Turmöffnung 206 ist die Turmwand in gebrochener Darstellung gezeigt, sodass das Innere des Turms 202 gezeigt ist. Vom Inneren des Turms 202 zugänglich sind zur Realisierung eines Spannbetons eine Vielzahl von Spanneinheiten 210 angeordnet. Jede Spanneinheit 210 umfasst eine Vielzahl an Spanngliedern. In der vorliegenden schematischen Darstellung der Fig. 2 umfasst die Spanneinheit 210 ein erstes Spannglied 212, ein zweites Spannglied 214 und ein drittes Spannglied 216. Die Spannglieder 212, 214, 216 erstrecken sich vorzugsweise im Wesentlichen über die gesamte Längserstreckung des Turms 202. Ferner können sich die Spannglieder 212, 214, 216 über einen Abschnitt der Längserstreckung des Turms 202 erstrecken. Die Spannglieder 212, 214, 216 sind vorzugsweise mittels einer Ankerplatte im Bereich des hier gezeigten Turmfußes und im Bereich des nicht gezeigten Turmkopfes befestigt.

Um den Turm 202 rückzubauen, ist es unter anderem erforderlich, die Spannglieder 212, 214, 216 zu trennen. Das Trennen der Spannglieder 212, 214, 216 durch eine Person mit einem Seitenschneider oder einem Schneidbrenner unmittelbar an der Spanneinheit 210 ist keine praktikable Möglichkeit, da die unter hoher Spannung stehenden Spannglieder 212, 214, 216 beim Trennen und die dadurch freiwerdende Energie unvorhersehbare Bewegungen ausführen. Diese unvorhersehbaren Bewegungen können für eine Person innerhalb des Turms 202 ein Sicherheitsrisiko darstellen.

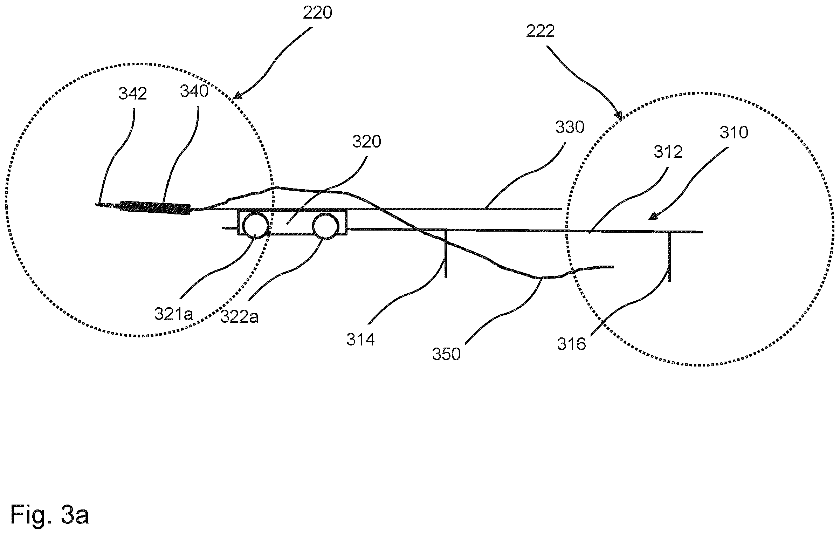

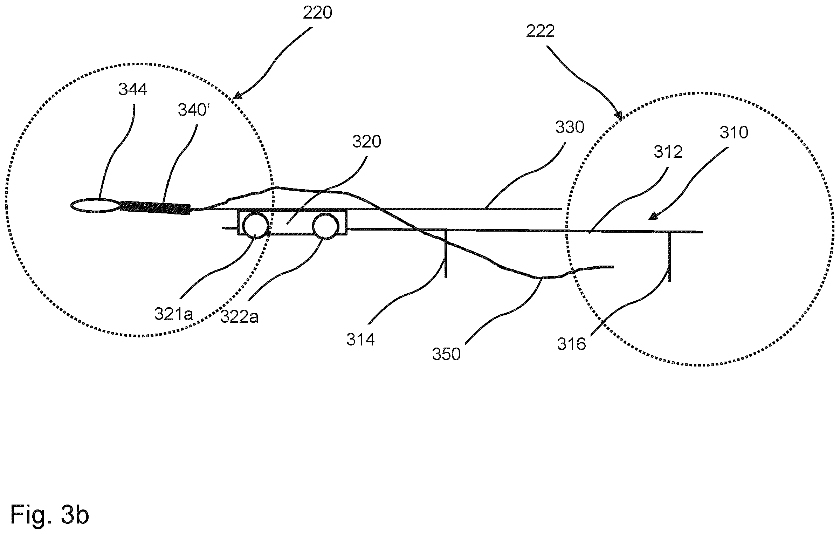

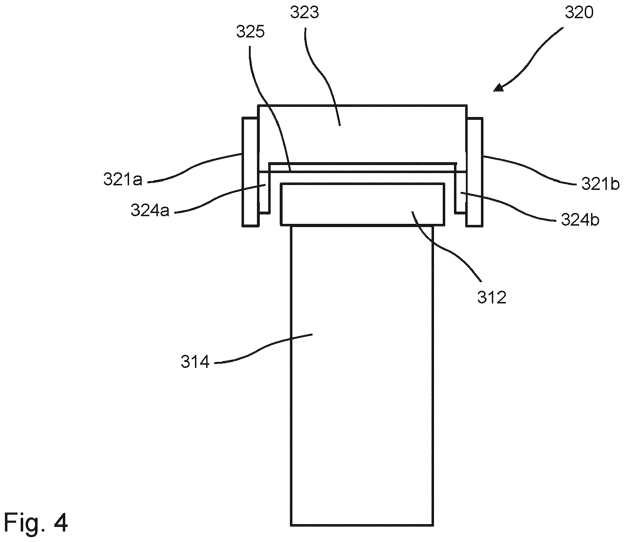

Um dennoch den Rückbau des Turms 202 zu ermöglichen, ist eine Trennvorrichtung 300 angeordnet. Die Trennvorrichtung 300 hat die Hauptkomponenten eines Grundgestells 310, eines Positionierelementes 330 und einer Trenneinheit 340. Das Grundgestell 310 ist innerhalb eines Trennbereichs 220 angeordnet. Mit dem Grundgestell ist das stabförmige Positionierelement 330 gekoppelt. Die Kopplung zwischen dem Grundgestell 310 und dem stabförmigen Positionierelement 330 erfolgt durch einen Arbeitsschlitten 320. Der in den Fign. 3a,b näher gezeigte Arbeitsschlitten 320 weist einen Grundkörper auf, an dem ein vorderes erstes Rad 321a und ein hinteres zweites Rad 322a angeordnet ist. An der in den Fign. 3a,b gegenüberliegenden Seite der Räder 321a, 322a sind ebenfalls Räder angeordnet. Der Arbeitsschlitten 320 ist auf einer Führungsschiene 312 des Grundgestells 310 angeordnet. Die Führungsschiene 312 ist insbesondere in der Fig. 4 ersichtlich. Darüber hinaus ist in der Fig. 4 die Führung des Arbeitsschlittens 320 durch die Führungsschiene 312 gezeigt. Die Führungsschiene weist eine horizontale Erstreckung auf, die geringer ist als eine innere horizontale Erstreckung des Grundkörpers 323 des Führungsschlittens 320. Von dem Grundkörper 323 erstrecken sich ein linker Schenkel 324a und ein rechter Schenkel 324b vertikal nach unten hinweg. Durch die Schenkel 324a, b erstreckt sich eine Achse 325. Die Achse 325 dient der Anbringung des linken ersten Rades 321a und des rechten ersten Rades 321b.

An dem in den Fign. 3a und 3b gezeigten Schlitten 320 ist das Positionierelement 330 vorzugsweise fest angeordnet. Insbesondere ist das Positionierelement 330 in Verfahrrichtung des Schlittens 320 fest an dem Führungsschlitten 320 angeordnet. Das Positionierelement 330 ist vorzugsweise um eine Achse, die orthogonal zur Zeichnungsebene ausgerichtet ist, schwenkbar gelagert.

An dem dem Trennbereich 220 zugewandten Ende des Positionierelementes 330 ist die Trenneinheit 340 angeordnet, wobei die Trenneinheit 340 in Fig. 3a als Schneidbrenner ausgebildet ist, wobei der Schneidbrenner eine Brennerflamme 342 aufweist. Die Trenneinheit 340' in Fig. 3b ist als Winkelschleifer ausgebildet, der eine Schruppscheibe 344 aufweist.

Das Grundgestell 310 erstreckt sich von einem Ende, das in dem Trennbereich 220 angeordnet ist, hin zu einem Ende, das in einem Bedienbereich 222 angeordnet ist. An der Trenneinheit 340 ist ein Gaszuführelement 350 angeordnet. Das Gaszuführelement 350 erstreckt sich entlang des Grundgestells 310 hin zu dem Bedienbereich 222, in dem mindestens eine nicht gezeigte Gasaufbewahrungseinheit angeordnet ist, die die Trenneinheit 340 mit einem Gas versorgt. Das Grundgestell 310 weist neben der Führungsschiene 312 eine erste Gestellabstützung 314 und eine zweite Gestellabstützung 316 auf. Die Gestellabstützungen 314, 316 dienen der sicheren und möglichst kippfreien Aufstellung des Grundgestells 310.

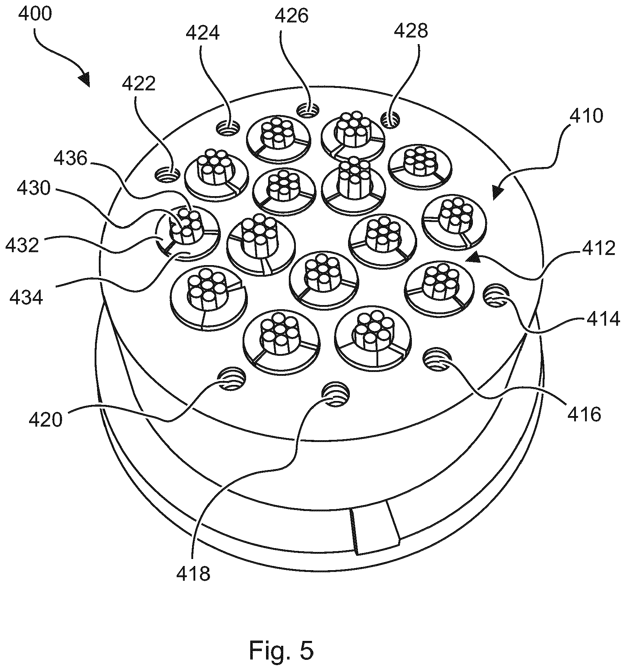

Fig. 5 zeigt eine schematische, dreidimensionale Ansicht einer Ankerplatte mit einer Vielzahl von befestigten Spanngliedern. Die Spanngliederbefestigung 400 umfasst die Ankerplatte 410. In der Ankerplatte 410 sind eine Vielzahl an Spanngliedöffnungen 412 angeordnet, in denen Spannglieder mit Keilelementen befestigt sind. Repräsentativ für alle Spanngliedöffnungen 412 mit Spanngliedern wird die Anordnung beispielhaft anhand des Spannglieds 430 erläutert. Das Spannglied 430 erstreckt sich durch den Turm hin zu der Spanngliederbefestigung 400, wo es durch eine Spanngliedöffnung 412 der Ankerplatte 410 sich hindurch erstreckt. In der Spanngliedöffnung 412 sind neben dem Spannglied 430 ein erstes Keilelement 432, ein zweites Keilelement 434 und ein drittes Keilelement 436 angeordnet. Die Keilelemente 432, 434, 436 sind derart ausgebildet, dass diese das Spannglied 430 bei Zugspannung des Spanngliedes 430 in der Spanngliedöffnung 412 verkeilen und somit in Längsrichtung des Spanngliedes 430 festhalten. Insbesondere sind die Keilelemente 432, 434, 436 ausgebildet, um das Spannglied 430 in die Bildebene hinein zu fixieren. Aus der Bildebene hinaus halten die Keilelemente 432, 434, 436 das Spannglied 430 im Wesentlichen nicht fest.

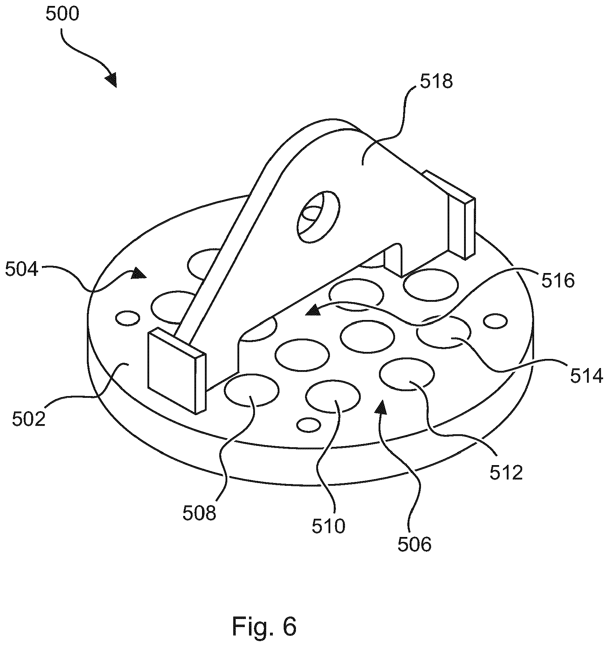

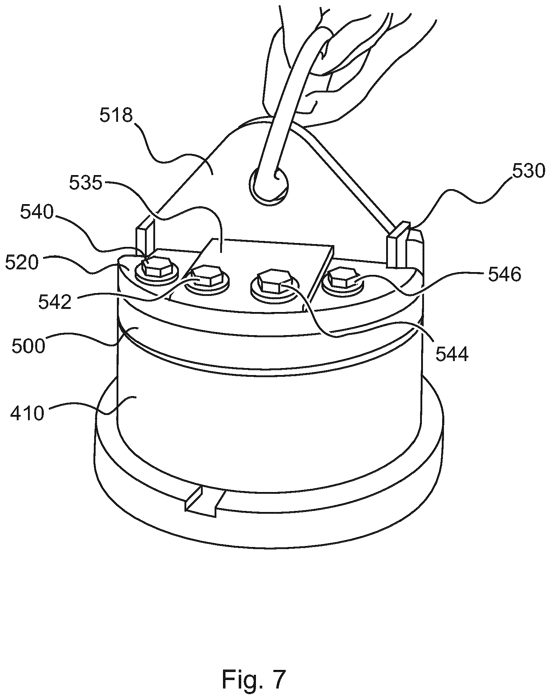

Die Ankerplatte 410 weist darüber hinaus die Plattenbefestigungsöffnungen 414 - 428 auf. Die Plattenbefestigungsöffnungen 414 - 428 sind beim ursprünglichen Einbau der Ankerplatte 410 in den Turm in der Regel nicht vorhanden. Die Plattenbefestigungsöffnungen 414 - 428 sind nachträglich für den Rückbau des Turms in die Ankerplatte 410 eingebracht worden. Die Plattenbefestigungsöffnungen 414 - 428 dienen der Befestigung einer in Fig. 6 und Fig. 7 gezeigten Abdeckeinheit bzw. eines ersten Abdeckelementes.

Das in Fig. 6 gezeigte Abdeckelement 500 ist zur Anordnung auf der in Fig. 5 gezeigten Ankerplatte 410 ausgebildet. Das erste Abdeckelement 500 weist eine erste Abdeckplatte 502 auf. Diametral auf der kreisrunden ersten Abdeckplatte 502 ist ein Brückenelement 518 angeordnet. Das Brückenelement 518 kann beispielsweise schweißtechnisch an der ersten Abdeckplatte 502 angeordnet sein. Das Brückenelement 518 weist an ihrer der ersten Abdeckplatte zugewandten Seite eine Plattenöffnung 516 auf, sodass zwischen dem Brückenelement 518 und der ersten Abdeckplatte 502 in einem Abschnitt eine lichte Höhe entsteht.

In der ersten Abdeckplatte 502 sind eine Vielzahl von Abdecköffnungen angeordnet. Durch das Brückenelement 518 entsteht eine erste Plattenfreifläche 504 auf der ersten Seite des Brückenelements 518 und eine zweite Plattenfreifläche 506 auf der anderen Seite des Brückenelements 518. In der zweiten Plattenfreifläche 506 sind eine erste Abdecköffnung 508, eine zweite Abdecköffnung 510, eine dritte Abdecköffnung 512 und eine vierte Abdecköffnung 514 angeordnet. Die Abdecköffnungen 510, 512, 514 dienen unter anderem zum Einführen eines Befestigungselementes durch die erste Abdeckplatte 502 hindurch hin zu Plattenbefestigungsöffnungen 414 - 428 an einer Ankerplatte 410.

In der Fig. 7 ist das erste Abdeckelement 500 im montierten Zustand gezeigt. Das erste Abdeckelement 500 ist auf der Ankerplatte 410 angeordnet. Auf der ersten Plattenfreifläche 504 ist eine zweite Abdeckplatte 520 angeordnet. Die zweite Abdeckplatte 520 weist eine halbkreisförmige Geometrie auf. Umfangsseitig schließt die zweite Abdeckplatte mit der ersten Abdeckplatte 502 ab. Darüber hinaus ist eine dritte Abdeckplatte 530 auf der zweiten Plattenfreifläche 506 angeordnet. Eine vierte Abdeckplatte 535 ist auf der zweiten und dritten Abdeckplatte 520, 530 angeordnet. Die vierte Abdeckplatte 535 erstreckt sich von der zweiten Abdeckplatte 520 zu der dritten Abdeckplatte 530 auf der zweiten Plattenfreifläche 506. Die zweite Abdeckplatte 520 ist mit einem ersten Befestigungselement 540 und einem vierten Befestigungselement 546 an der Ankerplatte 410 befestigt. Die Befestigungselemente 540, 546 erstrecken sich durch Durchgangsöffnungen der zweiten Abdeckplatte 520 durch die Abdecköffnungen der ersten Abdeckplatte 502 hin zu Plattenbefestigungsöffnungen mit Gewinden in der Ankerplatte 410.

Durch diese Befestigung der ersten Abdeckplatte 502, der zweiten Abdeckplatte 520, der dritten Abdeckplatte 530 und der vierten Abdeckplatte 535 erfolgt eine sichere Befestigung der Spannglieder 430 auch in vertikal nach oben gerichteter Richtung an der Ankerplatte 410. Beim Trennen der Spannglieder springt in der Regel die gesamte Ankerplatte 410 nach oben hinweg. Da die einzelnen Spannglieder jedoch im Wesentlichen nicht aus der Ankerplatte hinausspringen, kann die in Fig. 7 gezeigte Vorrichtung vollständig mit einem Kran aus dem Turm hinausgezogen werden. Hiermit wird das Entfernen der getrennten Spannglieder vereinfacht, da nicht die einzelnen Spannglieder hinausgezogen werden oder nachträglich wieder in ihre ursprüngliche Position an der Ankerplatte 410 verbracht werden müssen, sondern einfach mit einem Schritt hinausgezogen werden können.

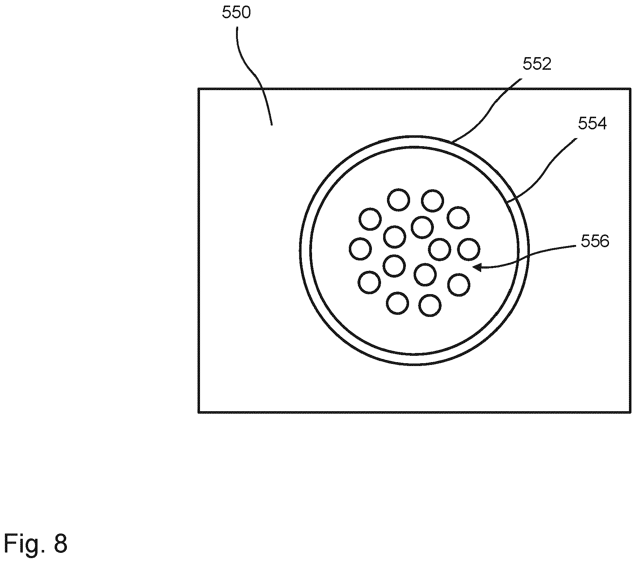

Fig. 8 zeigt eine schematische, zweidimensionale Ansicht eines im Keller eines Betonturms angeordneten Litzenkopfes. Insbesondere ist eine Kellerdecke 550 eines Betonturms gezeigt, an der ein Auffangring 552 für einen Litzenkopf 554 angeordnet ist. In dem Litzenkopf 554 sind eine Vielzahl an Spanngliedern 556 angeordnet und verankert. Wenn der Betonturm betretbar ist, können die Spannglieder 556 durch Auflösen der Verankerung in dem Litzenkopf 554 gelöst werden. Dies kann insbesondere durch ein Anordnen eines Schneidbrenners an dem Litzenkopf 554 und ein darauffolgendes Verbrennen und/oder Aufschmelzen des Litzenkopfes 554 erfolgen.

Fig. 9 zeigt ein schematisches Verfahren zum Trennen gespannter Spannglieder eines Betonturms. In Schritt 600 wird das Grundgestell 310 innerhalb des Trennbereichs 220 im Inneren des Betonturms 202 angeordnet. In dem Trennbereich 220 befindet sich mindestens eines der Spannglieder 212, 214, 216.

In dem Schritt 602 wird das stabförmige Positionierelement 330 mit dem Grundgestell 310 gekoppelt. In dem Schritt 604 wird die Trenneinheit 340 an dem dem Trennbereich zugewandten Ende des Positionierelementes 330 angeordnet. Die Schritte 602 und 604 können auch vor dem Schritt 600 durchgeführt werden. Insbesondere ist es bevorzugt, dass die Schritte 602 und 604 bereits im Voraus durchgeführt werden. In Schritt 606 wird die Trenneinheit 340 derart positioniert, dass diese eine vorbestimmte Beabstandung zu einem der Spannglieder 212, 214, 216 aufweist. Die vorbestimmte Beabstandung der Trenneinheit 340 zu einem der Spannglieder 212, 214, 216 bestimmt sich insbesondere durch die Technik der Trenneinheit. Beispielsweise kann die vorbestimmte Beabstandung durch eine Brennerflamme bestimmt werden. In Schritt 608 wird eine Abdeckeinheit über den Spanngliedöffnungen 412 an der Ankerplatte 410 im Bereich des Turmkopfes angeordnet und befestigt.

In dem Schritt 610 wird das Spannglied 212, 214, 216 mit der Trenneinheit 340 getrennt, beispielsweise indem ein Brennschneidprozess mit der Trenneinheit 340 an dem Spannglied 212, 214, 216 durchgeführt wird.

### BEZUGSZEICHEN

- 100: Windenergieanlage
- 102: Turm
- 104: Gondel
- 106: Rotor
- 108: Rotorblätter
- 110: Spinner
- 202: Betonturm
- 204: Turmwand
- 206: Turmöffnung
- 210: Spanneinheit
- 212: erstes Spannglied
- 214: zweites Spannglied
- 216: drittes Spannglied
- 220: Trennbereich
- 222: Bedienbereich
- 300: Trennvorrichtung
- 310: Grundgestell
- 312: Führungsschiene
- 314: erste Gestellabstützung
- 316: zweite Gestellabstützung
- 320: Arbeitsschlitten
- 321a: linkes erstes Rad
- 321b: rechtes erstes Rad
- 322a: zweites Rad
- 323: Grundkörper
- 324a: linker Schenkel
- 324b: rechter Schenkel
- 325: Achse
- 330: Positionierelement
- 340, 340`: Trenneinheit
- 342: Brennerflamme
- 344: Schruppscheibe
- 350: Gaszuführelement
- 400: Spanngliederbefestigung
- 410: Ankerplatte
- 412: Spanngliedöffnungen
- 414: erste Plattenbefestigungsöffnung
- 416: zweite Plattenbefestigungsöffnung
- 418: dritte Plattenbefestigungsöffnung
- 420: vierte Plattenbefestigungsöffnung
- 422: fünfte Plattenbefestigungsöffnung
- 424: sechste Plattenbefestigungsöffnung
- 426: siebte Plattenbefestigungsöffnung
- 428: achte Plattenbefestigungsöffnung
- 430: Spannglied
- 432: erstes Keilelement
- 434: zweites Keilelement
- 436: drittes Keilelement
- 500: erstes Abdeckelement
- 502: erste Abdeckplatte
- 504: erste Plattenfreifläche
- 506: zweite Plattenfreifläche
- 508: erste Abdecköffnung
- 510: zweite Abdecköffnung
- 512: dritte Abdecköffnung
- 514: vierte Abdecköffnung
- 516: Plattenöffnung
- 518: Brückenelement
- 520: zweite Abdeckplatte
- 530: dritte Abdeckplatte
- 535: vierte Abdeckplatte
- 540: erstes Befestigungselement
- 542: zweites Befestigungselement
- 544: drittes Befestigungselement
- 546: viertes Befestigungselement
- 550: Kellerdecke
- 552: Auffangring
- 554: Litzenkopf
- 556: Spannglieder

## Patentansprüche

1. Verfahren zum Trennen gespannter Spannglieder (212, 214, 216, 430) eines Betonturms (102, 202), insbesondere eines Windenergieanlagen-Betonturms, der eine Vielzahl an Spanngliedern (212, 214, 216, 430) aufweist, umfassend
- Koppeln eines stabförmigen Positionierelements (330) mit einem Grundgestell (310);
- Positionieren des Positionierelements (330) derart, dass dessen dem Betonturm (102, 202) zugewandtes Trennende innerhalb eines Trennbereichs (220) im Inneren des Betonturms (102, 202) angeordnet ist, wobei sich innerhalb des Trennbereichs (220) mindestens eines der Spannglieder (212, 214, 216, 430) befindet;
- Anordnen einer Trenneinheit (340) an dem Trennende des Positionierelements (330);
- Positionieren des Trennendes derart, dass die Trenneinheit (340) eine vorbestimmte Beabstandung zu einem der Spannglieder (212, 214, 216, 430) aufweist;
- Trennen des Spannglieds (212, 214, 216, 430) mit der Trenneinheit (340).

2. Verfahren gemäß Anspruch 1, wobei
- das Grundgestell (310) außerhalb des Betonturms (102, 202) angeordnet wird, oder
- das Grundgestell (310) vollständig oder teilweise innerhalb des Betonturms (102, 202) angeordnet wird.

3. Verfahren gemäß mindestens einem der vorhergehenden Ansprüche , wobei
- sich das Positionierelement (330) von dem Trennbereich (220) zu einem Bedienbereich (222), der sich vorzugsweise außerhalb des Betonturms (102, 202) befindet, erstreckt.

4. Verfahren gemäß mindestens einem der vorhergehenden Ansprüche, umfassend
- Anordnen eines Arbeitsschlittens (320) an dem Grundgestell (310),
- wobei der Arbeitsschlitten (320) an dem Grundgestell (310) bewegbar angeordnet ist, das Positionierelement (330) mittels des Arbeitsschlittens (320) mit dem Grundgestell (310) gekoppelt ist, und
- wobei vorzugsweise das Positionierelement (330) in einer Verfahrrichtung des Arbeitsschlittens (320) fest an dem Arbeitsschlitten (320) angeordnet ist.

5. Verfahren gemäß dem vorhergehenden Anspruch, wobei
- das Grundgestell (310) eine Führungsschiene (312) aufweist, und
- der Arbeitsschlitten (320) zwei an einer Achse (325) angeordnete Führungselemente, insbesondere Räder (321a, 321b, 322a), aufweist, wobei die Beabstandung der Führungselementinnenseiten, insbesondere Radinnenseiten, größer ist als eine Breite der Führungsschiene (312).

6. Verfahren gemäß mindestens einem der vorhergehenden Ansprüche, wobei
- die Trenneinheit (340) als ein Schneidbrenner ausgebildet ist oder diesen umfasst,
- an dem Schneidbrenner mindestens ein Gaszuführelement (350), vorzugsweise ein gasführender Schlauch, angeordnet ist, und
- vorzugsweise das Gaszuführelement (350) an dem Positionierelement (330) befestigt ist, vorzugsweise lösbar befestigt ist.

7. Verfahren gemäß dem vorhergehenden Anspruch, wobei
- dem Schneidbrenner (340) ein erstes Gas mittels eines ersten Gaszuführelements und ein zweites Gas mittels eines zweiten Gaszuführelements zugeführt wird.

8. Verfahren gemäß mindestens einem der vorhergehenden Ansprüche, wobei
- die Trenneinheit (340) als ein spanabhebendes Werkzeug ausgebildet ist oder dieses umfasst, und
- vorzugsweise die Trenneinheit (340) mit einer Werkzeugaufnahme an dem Positionierelement (330) angeordnet ist.

9. Verfahren gemäß mindestens einem der vorhergehenden Ansprüche, wobei
- die Spannglieder (212, 214, 216, 430) in einem dem Turmfuß abgewandten Bereich des Betonturms mit ihren Gliedenden mittels einer Ankerplatte (410) fixiert sind, wobei die Ankerplatte (410) vertikal ausgerichtete Spanngliedöffnungen (412) aufweist und wobei die Gliedenden mittels Keilelementen (432, 434, 436) derart in den Spanngliedöffnungen (412) angeordnet sind, dass diese in Richtung des Turmfußes fixiert sind,
das Verfahren umfassend
- Anordnen einer Abdeckeinheit über den Spanngliedöffnungen (412), und
- Befestigen der Abdeckeinheit an der Ankerplatte (410).

10. Verfahren gemäß dem vorhergehenden Anspruch, wobei
- die Abdeckeinheit ein erstes Abdeckelement (500) mit einer ersten Abdeckplatte (502) aufweist, wobei auf der ersten Abdeckplatte (502) ein Brückenelement (518) derart angeordnet ist, dass eine lichte Höhe zwischen der ersten Abdeckplatte (502) und dem Brückenelement (518) besteht, und die erste Abdeckplatte (502) eine erste Plattenfreifläche (504) und eine zweite Plattenfreifläche (506) aufweist, wobei das Brückenelement (518) zwischen der ersten Plattenfreifläche (504) und der zweiten Plattenfreifläche (506) angeordnet ist,
- auf der ersten Plattenfreifläche (504) eine zweite Abdeckplatte (520) und auf der zweiten Plattenfreifläche (506) eine dritte Abdeckplatte (530) angeordnet ist,
- die zweite Abdeckplatte (520) und die dritte Abdeckplatte (530) mit der ersten Abdeckplatte (502) verbunden sind,
- vorzugsweise die zweite Abdeckplatte (520) und die dritte Abdeckplatte (530) mittels einer vierten Abdeckplatte (535), die sich von der zweiten Abdeckplatte (520) bis zur dritten Abdeckplatte (530) durch die lichte Höhe hindurch erstreckt, verbunden sind.

11. Verfahren gemäß mindestens einem der vorhergehenden Ansprüche 9-10, wobei
- das Befestigen der Abdeckeinheit an der Ankerplatte (410) ein Einbringen von mindestens einer Öffnung (414-428) und ein Einbringen eines Gewindes in diese Öffnung (414-428) umfasst,
- die Abdeckeinheit an der Ankerplatte (410) mittels mindestens einer Schraube befestigt wird.

12. Verfahren gemäß mindestens einem der vorhergehenden Ansprüche 3-11, wenn rückbezogen auf Anspruch 3, wobei
- sich der Bedienbereich (222) in einem von mindestens drei Seiten geschlossenen Bedienraum befindet, und
- vorzugsweise der Bedienraum als Container ausgebildet ist, wobei ferner vorzugsweise die dem Betonturm (102, 202) zugewandte Seite des Containers zumindest teilweise geschlossen ist und/oder schließbar ausgebildet ist.

13. Verfahren gemäß mindestens einem der vorhergehenden Ansprüche 3-12, wenn rückbezogen auf Anspruch 3 und 6, wobei
- das dem Schneidbrenner (340) zugeführte Gas in mindestens einer Gasaufbewahrungseinheit angeordnet ist, und sich mindestens eine Gasaufbewahrungseinheit innerhalb des Bedienbereichs (222), vorzugsweise innerhalb des Bedienraums, vorzugsweise innerhalb des Containers befindet.

## Claims

1. A method for cutting tensioned tension members (212, 214, 216, 430) of a concrete tower (102, 202), in particular of a wind power installation concrete tower, which has a multiplicity of tension members (212, 214, 216, 430), said method comprising:
- coupling a bar-shaped positioning element (330) to a main frame (310);
- positioning the positioning element (330) in such a manner that the cut end thereof that faces the concrete tower (102, 202) is disposed within a cutting region (220) in the interior of the concrete tower (102, 202), wherein at least one of the tension members (212, 214, 216, 430) is situated within the cutting region (220);
- disposing a cutting unit (340) on the cut end of the positioning element (330);
- positioning the cut end in such a manner that the cutting unit (340) has a predetermined spacing from one of the tension members (212, 214, 216, 430);
- cutting the tension member (212, 214, 216, 430) with the cutting unit (340).

2. The method as claimed in claim 1, wherein
- the main frame (310) is disposed outside the concrete tower (102, 202); or
- the main frame (310) is disposed completely or partially within the concrete tower (102, 202).

3. The method as claimed in at least one of the preceding claims , wherein
- the positioning element (330) extends from the cutting region (220) to an operating region (222) which is preferably situated outside the concrete tower (102, 202).

4. The method as claimed in at least one of the preceding claims, comprising:
- disposing a processing carriage (320) on the main frame (310);
- wherein the processing carriage (320) is disposed so as to be movable on the main frame (310), the positioning element (330) by means of the processing carriage (320) is coupled to the main frame (310); and
- wherein the positioning element (330) in a relocation direction of the processing carriage (320) is fixedly disposed on the processing carriage (320).

5. The method as claimed in the preceding claim, wherein
- the main frame (310) has a guide rail (312); and
- the processing carriage (320) has two guiding elements, in particular wheels (321a, 321b, 322a), that are disposed on an axle (325), wherein the spacing of the insides of the guiding elements, in particular the insides of the wheels, is greater than a width of the guide rail (312).

6. The method as claimed in at least one of the preceding claims, wherein
- the cutting unit (340) is configured as a flame cutter or comprises the latter;
- at least one gas supply element (350), preferably a gas-conducting hose, is disposed on the flame cutter; and
- the gas supply element (350) is preferably fastened to the positioning element (330), preferably in a releasable manner.

7. The method as claimed in the preceding claim, wherein
- the flame cutter (340) by means of a first gas supply element is supplied a first gas, and by means of a second gas supply element is supplied a second gas.

8. The method as claimed in at least one of the preceding claims, wherein
- the cutting unit (340) is configured as a subtractive tool or comprises the latter; and
- the cutting unit (340) by way of a tool receptacle is preferably disposed on the positioning element (330).

9. The method as claimed in at least one of the preceding claims, wherein
- the tension members (212, 214, 216, 430) by way of the member ends thereof, in a region of the concrete tower that faces away from the tower base, are fixed by means of an anchor plate (410), wherein the anchor plate (410) has vertically aligned tension member openings (412), and wherein the member ends by means of chock elements (432, 434, 436) are disposed in the tension member openings (412) in such a manner that said member ends are fixed in the direction of the tower base;
the method comprising:
- disposing a cover unit above the tension member openings (412); and
- fastening the cover unit to the anchor plate (410).

10. The method as claimed in the preceding claim, wherein
- the cover unit has a first cover element (500) having a first cover plate (502), wherein a bridging element (518) is disposed on the first cover plate (502) in such a manner that an available height exists between the first cover plate (502) and the bridging element (518), and the first cover plate (502) has a first plate flank (504) and a second plate flank (506), wherein the bridging element (518) is disposed between the first plate flank (504) and the second plate flank (506);
- a second cover plate (520) is disposed on the first plate flank (504), and a third cover plate (530) is disposed on the second plate flank (506);
- the second cover plate (520) and the third cover plate (530) are connected to the first cover plate (502);
- the second cover plate (520) and the third cover plate (530) are preferably connected by means of a fourth cover plate (535) that from the second cover plate (520) extends through the available height to the third cover plate (530).

11. The method as claimed in at least one of the preceding claims 9-10, wherein
- the fastening of the cover unit to the anchor plate (410) comprises incorporating at least one opening (414-428) and incorporating a thread in this opening (414-428);
- the cover unit by means of at least one screw is fastened to the anchor plate (410).

12. The method as claimed in at least one of the preceding claims 3-11, if referring to claim 3, wherein
- the operating region (222) is situated in an operating space closed on at least three sides; and
- the operating space is preferably configured as a container, wherein that side of the container that faces the concrete tower (102, 202) is furthermore preferably at least partially closed and/or configured so as to be able to be closed.

13. The method as claimed in at least one of the preceding claims 3-12, if referring to claims 3 and 6, wherein
- the gas supplied to the flame cutter (340) is disposed in at least one gas storage unit, and at least one gas storage unit is situated within the operating region (222), preferably within the operating space, preferably within the container.

## Revendications

1. Procédé de séparation d'éléments de précontrainte (212, 214, 216, 430) précontraints d'une tour en béton (102, 202), en particulier d'une tour en béton d'éolienne, qui présente une pluralité d'éléments de précontrainte (212, 214, 216, 430) comprenant
- le couplage d'un élément de positionnement (330) en forme de barre avec un bâti de base (310) ;
- le positionnement de l'élément de positionnement (330) de telle manière que son extrémité de séparation tournée vers la tour en béton (102, 202) soit agencée à l'intérieur d'une zone de séparation (220) à l'intérieur de la tour en béton (102, 202), dans lequel au moins un des éléments de précontrainte (212, 214, 216, 430) se trouve à l'intérieur de la zone de séparation (220) ;
- l'agencement d'une unité de séparation (340) au niveau de l'extrémité de séparation de l'élément de positionnement (330) ;
- le positionnement de l'extrémité de séparation de telle manière que l'unité de séparation (340) présente un espacement prédéterminé par rapport à un des éléments de précontrainte (212, 214, 216, 430) ;
- la séparation de l'élément de précontrainte (212, 214, 216, 430) avec l'unité de séparation (340).

2. Procédé selon la revendication 1, dans lequel
- le bâti de base (310) est agencé en dehors de la tour en béton (102, 202) ou
- le bâti de base (310) est agencé complètement ou partiellement à l'intérieur de la tour en béton (102, 202) .

3. Procédé selon au moins l'une quelconque des revendications précédentes, dans lequel
- l'élément de positionnement (330) s'étend de la zone de séparation (220) à une zone de commande (222) qui se trouve de préférence en dehors de la tour en béton (102, 202).

4. Procédé selon au moins l'une quelconque des revendications précédentes, comprenant
- l'agencement d'un chariot de travail (320) au niveau du bâti de base (310),
- dans lequel le chariot de travail (320) est agencé de manière mobile au niveau du bâti de base (310), l'élément de positionnement (330) est couplé, au moyen du chariot de travail (320), au bâti de base (310), et
- dans lequel l'élément de positionnement (330) est de préférence agencé dans un sens de déplacement du chariot de travail (320) fixement au chariot de travail (320).

5. Procédé selon la revendication précédente, dans lequel
- le bâti de base (310) présente un rail de guidage (312), et
- le chariot de travail (320) présente deux éléments de guidage agencés au niveau d'un essieu (325), en particulier des roues (321a, 321b, 322a), dans lequel l'espacement des côtés intérieurs des éléments de guidage, en particulier des côtés intérieurs des roues, est supérieur à une largeur du rail de guidage (312).

6. Procédé selon au moins l'une quelconque des revendications précédentes, dans lequel
- l'unité de séparation (340) est réalisée comme un chalumeau ou comprend celui-ci,
- au moins un élément d'alimentation en gaz (350), de préférence un tuyau acheminant du gaz, est agencé au niveau du chalumeau et
- l'élément d'alimentation en gaz (350) est de préférence fixé à l'élément de positionnement (330), de préférence est fixé de manière amovible.

7. Procédé selon la revendication précédente, dans lequel
- le chalumeau (340) est alimenté en un premier gaz au moyen d'un premier élément d'alimentation en gaz et en un second gaz au moyen d'un second élément d'alimentation en gaz.

8. Procédé selon au moins l'une quelconque des revendications précédentes, dans lequel
- l'unité de séparation (340) est réalisée comme un outil d'enlèvement de copeaux ou comporte celui-ci, et
- l'unité de séparation (340) est de préférence agencée avec un logement d'outil au niveau de l'élément de positionnement (330).

9. Procédé selon au moins l'une quelconque des revendications précédentes, dans lequel
- les éléments de précontrainte (212, 214, 216, 430) sont fixés, dans une zone à l'opposé du pied de la tour en béton, avec leurs extrémités d'élément au moyen d'une plaque d'ancrage (410), dans lequel la plaque d'ancrage (410) présente des ouvertures d'élément de précontrainte (412) orientées verticalement et dans lequel les extrémités d'élément sont agencées au moyen d'éléments de cale (432, 434, 436) dans les ouvertures d'élément de précontrainte (412) de telle manière que celles-ci soient fixées en direction du pied de la tour,
le procédé comprenant
- l'agencement d'une unité de recouvrement sur les ouvertures d'élément de précontrainte (412), et
- la fixation de l'unité de recouvrement à la plaque d'ancrage (410).

10. Procédé selon la revendication précédente, dans lequel
- l'unité de recouvrement présente un premier élément de recouvrement (500) avec une première plaque de recouvrement (502), dans lequel un élément de pont (518) est agencé sur la première plaque de recouvrement (502) de telle manière qu'une hauteur intérieure existe entre la première plaque de recouvrement (502) et l'élément de pont (518), et la première plaque de recouvrement (502) présente une première surface libre de plaque (504) et une seconde surface libre de plaque (506), dans lequel l'élément de pont (518) est agencé entre la première surface libre de plaque (504) et la seconde surface libre de plaque (506),
- une deuxième plaque de recouvrement (520) est agencée sur la première surface libre de plaque (504) et une troisième plaque de recouvrement (530) est agencée sur la seconde surface libre de plaque (506),
- la deuxième plaque de recouvrement (520) et la troisième plaque de recouvrement (530) sont reliées à la première plaque de recouvrement (502),
- la deuxième plaque de recouvrement (520) et la troisième plaque de recouvrement (530) sont de préférence reliées au moyen d'une quatrième plaque de recouvrement (535) qui s'étend de la deuxième plaque de recouvrement (520) jusqu'à la troisième plaque de recouvrement (530) à travers la hauteur intérieure.

11. Procédé selon au moins l'une quelconque des revendications précédentes 9 à 10, dans lequel
- la fixation de l'unité de recouvrement à la plaque d'ancrage (410) comprend une introduction d'au moins une ouverture (414-428) et une introduction d'un filet dans cette ouverture (414-428),
- l'unité de recouvrement est fixée à la plaque d'ancrage (410) au moyen d'au moins une vis.

12. Procédé selon au moins l'une quelconque des revendications précédentes 3 à 11, lorsqu'elle se réfère à la revendication 3, dans lequel
- la zone de commande (222) se trouve dans un espace de commande fermé par au moins trois côtés, et
- l'espace de commande est de préférence réalisé comme contenant, dans lequel de plus, de préférence, le côté tourné vers la tour en béton (102, 202) du contenant est fermé au moins partiellement et/ou est réalisé de manière à pouvoir être refermé.

13. Procédé selon au moins l'une quelconque des revendications précédentes 3 à 12, lorsqu'elles se réfèrent aux revendications 3 et 6, dans lequel
- le gaz fourni au chalumeau (340) est agencé dans au moins une unité de conservation de gaz, et au moins une unité de conservation de gaz se trouve à l'intérieur de la zone de commande (222), de préférence à l'intérieur de l'espace de commande, de préférence à l'intérieur du contenant.
